# EUROPÄISCHE PATENTSCHRIFT

(11) **EP 2 504 275 B1**
(45) Veröffentlichungstag und Bekanntmachung des Hinweises auf die Patenterteilung: **01.05.2019**
(21) Anmeldenummer: 10803439.8
(22) Anmeldetag: 22.11.2010
(51) Int. Cl.: B82Y 30/00, H01G 11/28, H01G 11/36, H01G 11/86, H01G 11/38

(54) **ANORDNUNG MIT EINEM TRÄGER,EINER ZWEIDIMENSIONALEN DECKSCHICHT UNE EINEM DAZWISCHEN LIEGENDEN MATERIAL SOWIE EIN VERFAHREN ZU DESSEN HERSTELLUNG**
ARRANGEMENT HAVING A SUBSTRATE, A TWO-DIMENSIONAL COATING LAYER AND A MATERIAL THEREBETWEEN AND A METHOD FOR ITS PRODUCTION
ARRANGEMENT COMPRENNANT UN SUBSTRAT, UNE COUCHE DE REVÊTEMENT BIDIMENSIONNELLE ET UN MATÉRIAU ENTRE CE DERNIER ET SON PROCÉDÉ DE PRODUCTION

(30) Priorität: 26.11.2009 DE 102009056052
(43) Veröffentlichungstag der Anmeldung: 03.10.2012
(73) Patentinhaber: Humboldt Universität zu Berlin, 10099 Berlin (DE)
(72) Erfinder: SEVERIN, Nikolai, 12439 Berlin (DE); DORN, Martin, 12047 Berlin (DE); RABE, Jürgen, 14163 Berlin (DE)
(74) Vertreter: Fischer, Uwe
(86) Internationale Anmeldenummer: PCT/DE2010/050084
(87) Internationale Veröffentlichungsnummer: WO 2011/063802

(56) Entgegenhaltungen:
- WO-A2-2009/123771
- US-A1- 2007 212 538
- US-A1- 2008 268 318
- PATIL A J ET AL: "Aqueous stabilization and self-assembly of graphene sheets into layered bio-nanocomposites using DNA", ADVANCED MATERIALS 20090821 WILEY-VCH VERLAG DEU, Bd. 21, Nr. 31, 21. August 2009 (2009-08-21), Seiten 3159-3164, XP002631525, DOI: DOI:10.1002/ADMA.200803633

## Beschreibung

Die Erfindung bezieht sich auf eine Anordnung mit einem Träger, einer Schicht und einem zwischen dem Träger und der Schicht eingeschlossenen Material. Die Erfindung ist in Anspruch 1 definiert.

Die Druckschrift "Aqueous Stabilization and Self-Assembly of Graphene Sheets into Layered Bio-Nanocomposites using DNA" (Avinash J. Patil et al., Advanced Materials, 2009, 21, 3159-3164) beschreibt ein Verfahren, bei dem DNA zwischen Graphenschichten eingebettet wird.

Aus der internationalen Anmeldung WO 2009/123771 A2 ist ein Verfahren bekannt, mit dem Beschichtungen auf der Basis funktionalisierter Graphenschichten hergestellt werden.

Der Erfindung liegt die Aufgabe zugrunde, eine Anordnung anzugeben, mit der sich Materialien sicher und dauerhaft einschließen oder schützen sowie hinsichtlich ihrer Verteilung verändern lassen.

Diese Aufgabe wird erfindungsgemäß durch eine Anordnung mit den Merkmalen gemäß Patentanspruch 1 gelöst. Vorteilhafte Ausgestaltungen der erfindungsgemäßen Anordnung sind in Unteransprüchen angegeben.

Ein wesentlicher Vorteil der erfindungsgemäßen Anordnung ist darin zu sehen, dass zweidimensional vernetzte Schichten sehr dünn und dennoch stabil sind. Außerdem weisen zweidimensional vernetzte Schichten je nach Material herausragende Eigenschaften auf, die sich beispielsweise von dreidimensionalen Kristallen gleicher Zusammensetzung deutlich unterscheiden können. Beispielsweise können zweidimensional vernetzte Schichten sehr dehnbar sowie gleichzeitig sehr undurchlässig für andere Materialien sein, oder auch optisch transparent und gleichzeitig elektrisch gut leitfähig.

Ein weiterer wesentlicher Vorteil der erfindungsgemäßen Anordnung ist, dass sich mit zweidimensional vernetzten Schichten auch kleinste Materialmengen, wie Flüssigkeiten im Sub-Zeptoliterbereich, dauerhaft und sicher einschließen lassen. Das Einschließen kann beispielsweise dazu dienen, die Flüssigkeit auf dem Träger lokal zu fixieren, um eine nachfolgende Untersuchung des Materials zu ermöglichen oder zu vereinfachen.

Als Flüssigkeiten kommen unter anderem beispielsweise aceton-, methanol-, chloroform- und/oder wasserhaltige Flüssigkeiten in Betracht.

Die zweidimensional vernetzte Schicht der erfindungsgemäßen Anordnung bzw. die zweidimensional vernetzten Schichten sind vorzugsweise für Gase und Flüssigkeiten undurchlässig, dünner als 10 Atomlagen und/oder atomar glatt. Unter dem Begriff "atomar glatt" wird dabei eine Schichtdickenschwankung von maximal ± 1 Atomlage verstanden

Das eingeschlossene Material kann beispielsweise biologisches Material aufweisen . Das eingeschlossene biologische Material weist vorzugsweise Biomoleküle (z. B. RNA, DNA), Zellen, Viren, Bakterien, Sporen und/oder Prione auf.

Als zweidimensional vernetzte Schicht(en) wird vorzugsweise eine zweidimensionale Kristallschicht verwendet. Bevorzugt handelt es sich bei der zweidimensionalen Kristallschicht um eine atomare Kristallschicht, im einfachsten Fall um eine Kristallschicht aus nur einem chemischen Element.

Die zweidimensional vernetzte Schicht bzw. die zweidimensional vernetzten Schichten sind vorzugsweise elektrisch leitfähig und/oder für Gase und Flüssigkeiten, beispielsweise für Sauerstoff, Feuchte und/oder Wasser, undurchlässig.

Die Oberfläche des Trägers ist vorzugsweise auf atomarer Skala bzw. atomar glatt. Unter dem Begriff "auf atomarer Skala glatt" bzw. "atomar glatt" wird dabei eine Schichtdickenschwankung von maximal ± 1 Atomlage verstanden.

Bei einer besonders vorteilhaften Ausgestaltung der Anordnung ist vorgesehen, dass die zweidimensional vernetzte Schicht eine Graphenschicht oder eine graphenartige Schicht ist bzw. die zweidimensional vernetzten Schichten Graphenschichten oder graphenartige Schichten sind. Eine Graphenschicht ist eine zweidimensionale hexagonale Kohlenstoffkristallschicht und für das Einschließen von Material auf einem Träger oder zum Schützen eines Materials vor äußerer Einwirkung (zum Beispiel Wasser, Feuchtigkeit, Gas) besonders gut geeignet: So ist Graphen sehr dehnbar, bis zu mindestens 20 % in alle Richtungen in der Ebene, und selbst für besonders flüchtige Materialien, wie beispielsweise gasförmiges Helium, undurchlässig. Mit einer Graphenschicht lässt sich somit eine Vielzahl unterschiedlicher Materialien sicher und dauerhaft auf einem Träger fixieren und/oder vor äußerer Einwirkung schützen. Darüber hinaus ist Graphen sehr druckresistent, so dass auch bei hoher mechanischer Beanspruchung ein Austreten des eingeschlossenen Materials und/oder eine Beschädigung der Graphenschicht zuverlässig vermieden wird.

Ein anderes Beispiel ist Graphenoxid, das nicht homogen kristallin ist, aber eine zweidimensionale vernetzte Schicht aufweist.

Bei kleinen Flüssigkeitsmengen werden sich zwischen der zweidimensional vernetzten Schicht und dem Träger in vorteilhafter Weise flüssige Molekülschichten ausbilden, so dass Dickenschwankungen der eingeschlossenen Flüssigkeitsschicht zu einer Stufenbildung in der zweidimensional vernetzten Schicht führen; die Stufenhöhe entspricht dabei einem Vielfachen der Dicke einer flüssigen Moleküleinzelschicht. Die zweidimensional vernetzte Schicht wird sich mit anderen Worten also dem Höhenprofil der eingeschlossenen Flüssigkeit anpassen und in entsprechender Weise lokal gedehnt werden. Dies ermöglicht es beispielsweise, die Dicke von Molekülschichten von Flüssigkeiten zu messen, beispielsweise mit einem Rasterkraftmikroskop.

Auch kann das eingeschlossene Material optisch oder elektronisch aktive Materialien aufweisen oder aus solchen bestehen. Beispielsweise kann das eingeschlossene Material optisch oder elektronisch aktive Polymere aufweisen oder aus solchen bestehen. Das eingeschlossene Material wird vorzugsweise durch die vernetzten Schichten geschützt.

Die Oberfläche des Trägers kann rau oder glatt sein. Als besonders vorteilhaft wird es jedoch angesehen, wenn die Oberfläche durch eine monokline Silikatschicht gebildet ist. Eine monokline Silikatoberfläche wird fachsprachlich auch als Glimmer-Oberfläche (englisch: mica; lateinisch: micare = strahlen, funkeln, schimmern) bezeichnet, da sie überdurchschnittlich glatt ist und entsprechende mechanische und optische Eigenschaften aufweist.

Vorzugsweise besteht die Trägeroberfläche aus einer monoklinen Silikatschicht, die sich durch folgende chemische Strukturformel beschreiben lässt:

*X*₂*Y*₄₋₆*Z*₈O₂₀(OH,F)₄

wobei
- *X* einen Platzhalter für K, Na, Ca, Ba, Rb, oder Cs darstellt,
- *Y* einen Platzhalter für Al, Mg, Fe, Mn, Cr, Ti oder Li darstellt und
- *Z* einen Platzhalter für Si, Al, Fe³⁺ oder Ti darstellt.

Der Vorteil einer monoklinen Silikatträgerschicht ist darin zu sehen, dass diese aufgrund ihrer hohen Glätte die Schichtung einer eingeschlossenen Flüssigkeit in Form flüssiger Moleküleinzelschichten zwischen der zweidimensional vernetzten Schicht und der Trägeroberfläche fördert.

Alternativ kann die Oberfläche auch strukturiert, z. B. lokal aufgeraut sein, um eine strukturierte Materialverteilung, insbesondere Flüssigkeitsverteilung, auf der Trägeroberfläche vorzugeben oder eine solche zu fördern.

Die Menge des eingeschlossenen Materials kann - beispielsweise zu Analysezwecken - sehr klein sein. Selbst Volumina im Sub-Zeptoliterbereich (Volumen ≤ 10⁻²¹ 1) lassen sich mit einer zweidimensional vernetzten Schicht auf dem Träger fixieren. Die Schicht kann das eingeschlossene Material gasdicht schützen, beispielsweise um ein Bleichen von Fluoreszenz zu verhindern.

Das eingeschlossene Material kann auch einen Bestandteil eines optischen oder elektronischen Bauelements, zum Beispiel eines Sensors, bilden.

Die Anordnung umfasst vorzugsweise eine Manipulationseinrichtung, die geeignet ist, auf den Träger, die Schicht und/oder das zwischen dem Träger und der Schicht eingeschlossene Material einzuwirken, vorzugsweise mechanisch, elektromagnetisch, thermisch und/oder chemisch. Vorzugsweise ist die Manipulationseinrichtung geeignet, voneinander getrennte Materialabschnitte, die zwischen dem Träger und der Schicht eingeschlossen sind, zusammenführen und mit den voneinander getrennten Materialabschnitten einen zusammenhängenden Materialabschnitt zu formen, und/oder geeignet, einen zusammenhängenden Materialabschnitt, der zwischen dem Träger und der Schicht eingeschlossen ist, voneinander zu trennen. Die Anordnung kann beispielsweise eine Pumpe oder einen Bestandteil einer Pumpe bilden.

Die Anordnung kann beispielsweise eine Fluid-Komponente, zum Beispiel in Form einer Pumpe, bilden. Vorzugsweise weist eine solche Fluid-Komponente besonders kleine Flüssigkeitsvolumina, vorzugsweise im Zeptoliterbereich oder im Sub-Zeptoliterbereich, auf.

Im Übrigen wird es als vorteilhaft angesehen, wenn die Anordnung eine Kondensatorstruktur mit zumindest zwei Kondensatorflächen aufweist, von denen eine durch die zweidimensional vernetzte Schicht oder durch zumindest eine der zweidimensional vernetzten Schichten gebildet ist. Durch das Anlegen einer elektrischen Spannung an die Elektrodenstruktur lassen sich in sehr einfacher Weise mechanische Kräfte erzeugen und die zweidimensional vernetzte Schicht verformen, so dass es zu einer lokalen Druckerhöhung kommen kann.

Eine lokale Druckerhöhung kann bei Fluid-Komponenten beispielsweise dazu genutzt werden, eine Pumpfunktion zu erreichen. In einem solchen Falle wird an das Volumen, in dem das Material bzw. die Flüssigkeit eingeschlossen ist, vorzugsweise ein Zufluss- und/oder Abflusskanal angeschlossen, um ein Weiter- und/oder Ableiten der Flüssigkeit zu erlauben.

Mit anderen Worten kann die Anordnung also beispielsweise eine Pumpe bilden, die durch eine elektrische Ansteuerung betrieben wird. Alternativ und/oder zusätzlich können auch andere Arten der Ansteuerung vorgesehen werden, beispielsweise auf der Basis mechanisch und/oder induktiv arbeitender Einrichtungen.

Zusätzlich zu Flüssigkeiten können auch andere Materialien zwischen dem Träger und der zweidimensional vernetzten Schicht eingeschlossen werden, beispielsweise feste Materialien wie Nanoteilchen, mikrometergroße Teilchen, Einzelmoleküle und/oder Polymermaterial.

Der Einschluss von biologischem Material kann beispielsweise dazu dienen, dieses auf dem Träger lokal zu fixieren, um nachfolgende messtechnische Untersuchungen vornehmen zu können. Als biologisches Material können beispielsweise Blutzellen, Viren, Bakterien oder dergleichen auf dem Träger fixiert werden.

Auch kann das eingeschlossene Material beispielsweise ein optisch aktives Material sein. Ein optisch aktives Material ermöglicht beispielsweise die Herstellung optisch aktiver Komponenten wie Leuchtdioden, z. B. organischer Leuchtdioden, oder dergleichen.

Auch lassen sich mit der Anordnung andere optische Komponenten herstellen. Beispielsweise können mit Hilfe von Nanoteilchen oder mikrometergroßen Teilchen Gitterstrukturen oder dergleichen gebildet werden. Die optischen Komponenten werden vorzugsweise auf Basis einer Graphen-Kristallschicht realisiert, da Graphen für elektromagnetische Wellen, insbesondere Lichtwellen, weitgehend optisch transparent ist. Die Beeinflussung der elektromagnetischen Wellen erfolgt deshalb hauptsächlich bzw. ausschließlich durch das zwischen dem Träger und der Graphenschicht eingeschlossene Material.

Darüber hinaus kann eine Beeinflussung elektromagnetischer Wellen oder eine Beeinflussung von Elektronen oder Elektronenstrahlen dadurch bewirkt werden, dass die Oberfläche der zweidimensional vernetzten Schicht geriffelt ausgeführt wird; beispielsweise kann durch eine Riffelung eine Leitung, Beugung, Streuung oder Reflexion elektromagnetischer Wellen und/oder von Elektronenstrahlen erfolgen.

Auch kann vorgesehen sein, dass zwischen dem Träger und der zweidimensional vernetzten Schicht Polymermaterial eingeschlossen wird, um dieses vor äußeren Einflüssen wie Feuchtigkeit oder Wasser zu schützen. Insbesondere optisch aktive Polymermaterialien, wie solche, die bei organischen Leuchtdioden (LEDs) eingesetzt werden, sind gegenüber äußeren Einflüssen sehr empfindlich. Demgemäß wird es als vorteilhaft angesehen, wenn eine zweidimensional vernetzte Schicht als Schutzschicht zum Schützen eines organischen Polymermaterials, insbesondere zum Schützen organischer Leuchtdioden, eingesetzt wird. Zweidimensional vernetzte Schichten sind als Schutzschichten insbesondere deshalb vorteilhaft, da sie - beispielsweise im Gegensatz zu starren Glasschichten - flexibel und - im Gegensatz zu bekanntem ITO (Indiumzinnoxid)-Material - relativ preisgünstig sind. Als Erfindung wird also auch eine Anordnung mit einer organischen Leuchtdiode angesehen, bei der das organische, optisch aktive Material zwischen einem Träger und einer zweidimensional vernetzten Schicht eingeschlossen ist.

Die Erfindung bezieht sich darüber hinaus auf ein Verfahren, wie es in Anspruch 15 beschrieben ist..

Bezüglich der Vorteile des erfindungsgemäßen Verfahrens wird auf die obigen Ausführungen im Zusammenhang mit der erfindungsgemäßen Anordnung verwiesen, da die Vorteile der erfindungsgemäßen Anordnung denen des erfindungsgemäßen Verfahrens im Wesentlichen entsprechen.

Als vorteilhaft wird es angesehen, wenn die Verteilung des Materials nach dem Einschließen zwischen dem Träger und der zumindest einen zweidimensional vernetzten Schicht verändert wird, beispielsweise mittels einer mechanischen, einer elektrostatischen und/oder magnetischen Krafteinwirkung.

Besonders einfach und damit vorteilhaft lässt sich die Verteilung mit Hilfe einer Spitze verändern, die auf die zweidimensional vernetzte Schicht aufgesetzt wird. Vorzugsweise handelt es sich um eine derart geformte Spitze, wie sie bei Rasterkraftmikroskopen als Rasterkraftmikroskopspitze eingesetzt wird oder zumindest einsetzbar wäre.

Durch das Verändern der Verteilung des Materials zwischen der zweidimensional vernetzten Schicht und dem Träger lassen sich auch nach dem Einschließen des Materials zwischen Träger und zweidimensional vernetzter Schicht gewünschte Strukturen herstellen. Auch ist es möglich, die Verteilung des Materials wiederholt zu verändern, also beispielsweise "Schreibprozesse" sowie "Löschprozesse" bezüglich der Struktur und der Materialverteilung zwischen Träger und zweidimensional vernetzter Schicht durchzuführen. In der beschriebenen Weise lassen sich beispielsweise Informationen mechanisch speichern, indem diese in das Material zwischen Träger und zweidimensional vernetzter Schicht eingeschrieben werden. Die Anordnung mit Träger, Schicht und dazwischen eingeschlossenem Material kann somit auch eine mechanische Speichereinrichtung zum Speichern von Informationen bilden.

Der Verschleiß beim Löschen und Schreiben der Informationen ist aufgrund der hohen Stabilität der zweidimensional vernetzten Schicht relativ gering, so dass die Anzahl der Schreib- und Löschvorgänge für technisch relevante Anforderungen ausreichend hoch ist.

Die Verteilung des Materials zwischen Träger und zweidimensional vernetzter Schicht kann darüber hinaus verändert werden, um vorgegebene Materialstrukturen, wie beispielsweise Kanäle, in die Anordnung hinein zu "stempeln". Eine solche Stempeltechnik kann insbesondere dann von Vorteil sein, wenn Fluid-komponenten oder optische Komponenten, wie sie eingangs bereits erwähnt worden sind, hergestellt werden sollen.

Wenn die Materialverteilung zwischen der zweidimensional vernetzten Schicht und dem Träger fest vorgegeben ist und nachträglich nicht verändert werden soll, wird es als vorteilhaft angesehen, wenn die Oberfläche des Trägers vor dem Aufbringen des einzuschließenden Materials lokal verändert bzw. strukturiert und/oder funktionalisiert wird, beispielsweise durch Aufrauen, Ätzen oder eine sonstige Oberflächenbehandlung. In der Regel wird sich das einzuschließende Material auf dem Träger derart verteilen, dass es auf den aufgerauten Oberflächenabschnitten liegen bleibt, so dass es während des nachfolgenden Einschließens mit der zweidimensional vernetzten Schicht dort auch verbleibt und sich eingeschlossene Materialbereiche an den gewünschten Stellen bilden.

Außerdem bezieht sich die Erfindung auf ein Verfahren zum Betreiben einer Anordnung mit einer Manipulationseinrichtung, dadurch gekennzeichnet, dass mit der Manipulationseinrichtung voneinander getrennte Materialabschnitte, die zwischen dem Träger und der Schicht eingeschlossen sind, zusammengeführt werden und mit den voneinander getrennten Materialabschnitten ein zusammenhängender Materialabschnitt geformt wird und/oder ein zusammenhängender Materialabschnitt, der zwischen dem Träger und der Schicht eingeschlossen ist, voneinander getrennt wird.

Die Erfindung wird nachfolgend anhand von Ausführungsbeispielen näher erläutert; dabei zeigen beispielhaft:
- Fig.1-4: ein Verfahren zum Herstellen eines Ausführungsbeispiels einer erfindungsgemäßen Anordnung,
- Fig. 5-8: das Verändern der Materialverteilung zwischen einem Träger und einer zweidimensional vernetzten Schicht mit einer Spitze,
- Figur 9: ein Verfahren zum Herstellen von Nanoteilchen mit Hilfe von Flüssigkeitstropfen,
- Figur 10: ein Verfahren zum Stempeln einer Flüssigkeitsstruktur unterhalb einer zweidimensional vernetzten Schicht,
- Figur 11: ein Ausführungsbeispiel für eine erfindungsgemäße Anordnung, die eine Fluidkomponente mit einer Kondensatorstruktur bildet,
- Figur 12: ein Ausführungsbeispiel für eine erfindungsgemäße Anordnung, die eine optische Komponente mit einem optischen Gitter bildet,
- Figur 13: ein Ausführungsbeispiel für eine erfindungsgemäße Anordnung, bei der eingeschlossene Polymermoleküle eine gerichtete Elektronenleitung unterstützen,
- Figur 14: ein Ausführungsbeispiel für eine erfindungsgemäße Anordnung, die einen Bildschirm auf der Basis von organischen oder anorganischen Leuchtdioden bildet.

In den Figuren werden aus Gründen der Übersicht für vergleichbare oder identische Komponenten stets dieselben Bezugszeichen verwendet.

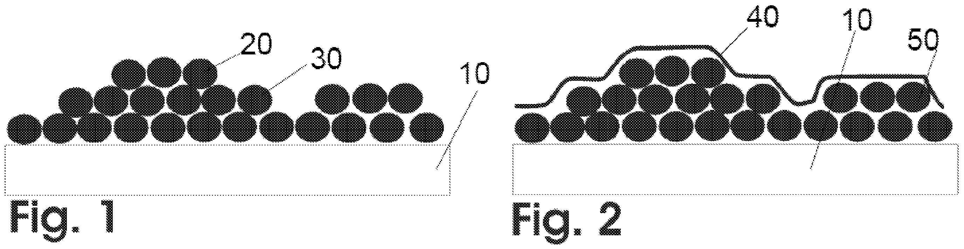

In der Figur 1 sieht man einen Träger 10, auf dem Material 20 in Form einer Flüssigkeit aufliegt. Die Flüssigkeitsmoleküle sind mit dem Bezugszeichen 30 gekennzeichnet.

Die Figur 2 zeigt den Träger 10 mit dem Material 20, nachdem eine zweidimensional vernetzte Schicht 40 auf das Material 20 und den Träger 10 aufgetragen worden ist. Bei der zweidimensional vernetzten Schicht 40 handelt es sich vorzugsweise um eine Graphenschicht.

Man erkennt in der Figur 2, dass sich die zweidimensional vernetzte Schicht 40 an das Höhenprofil der Flüssigkeit anpasst, so dass der Oberflächenverlauf der zweidimensional vernetzten Schicht 40 der Dickenschwankungen der eingeschlossenen Flüssigkeit folgt und es zu einer Stufenbildung kommt, deren Stufenhöhe einem Vielfachen der Dicke einer flüssigen Moleküleinzelschicht 50 entspricht.

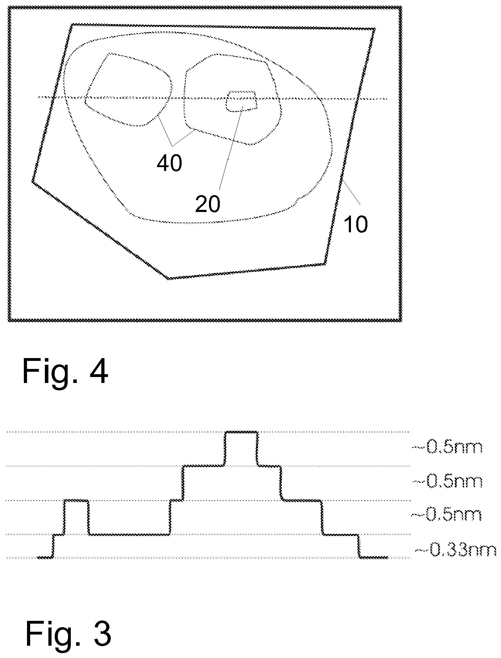

Die Figur 3 zeigt beispielhaft ein mit einem Rasterkraftmikroskop gemessenes Höhenprofil für den Fall, dass zwischen dem Träger und einer Graphenschicht Aceton eingeschlossen wird. Es lässt sich erkennen, dass die Dicke der flüssigen Moleküleinzelschichten ca. 0,5 nm und die Dicke der zweidimensional vernetzten Graphenschicht ca. 0,33 nm beträgt.

Die Figur 4 zeigt den Träger 10 mit der zweidimensional vernetzten Schicht 40 und dem lokal dazwischen eingeschlossenen Material 20 (Flüssigkeit) in der Draufsicht. Die Oberfläche des Trägers 10 wird vorzugsweise durch eine monokline Silikatoberfläche gebildet, da eine solche sehr glatt ist und sich die Flüssigkeit darauf sehr gut verteilen kann.

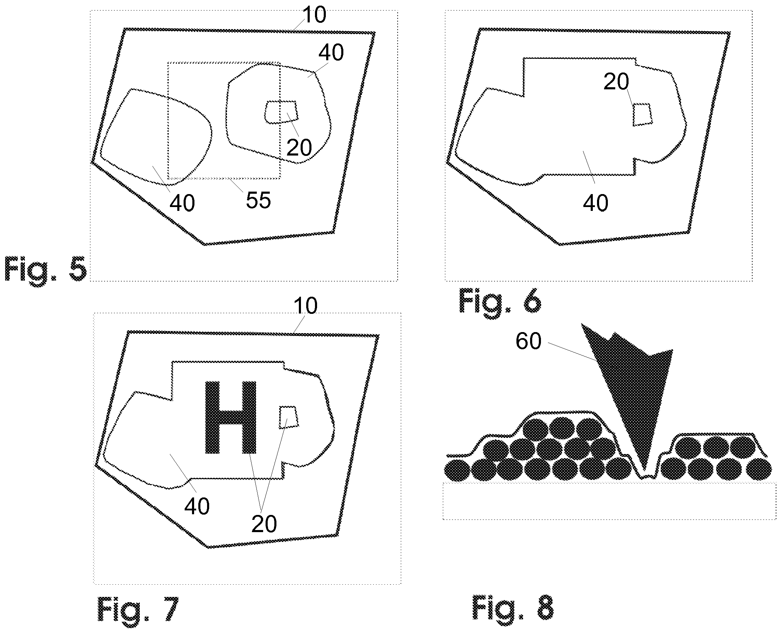

In der Figur 5 ist der Träger 10 gemäß der Figur 4 gezeigt, bevor elektrisch, magnetisch und/oder mechanisch die Verteilung des Materials 20 im Bereich innerhalb der Kontur 55 sowie die Anordnung der zweidimensional vernetzten Schicht 40 verändert wird.

Die Figur 6 zeigt beispielhaft die sich ergebende Struktur, nachdem das Material 20 aus dem Bereich innerhalb der Kontur 55 herausgedrückt worden ist und dieser Bereich materialfrei ist.

Die Figur 7 zeigt beispielhaft eine andere Struktur, nachdem mit dem Material 20 innerhalb der Kontur 55 ein Muster bestehend aus zwei parallelen Balken und einem dazu senkrecht stehenden Balken gebildet worden ist.

Das Verschieben des Materials 20 unterhalb der zweidimensional vernetzten Schicht 40 kann in einfacher Weise mechanisch, beispielsweise mit einer Spitze 60 vorgenommen werden. Eine solche Spitze zeigt beispielhaft die Figur 8.

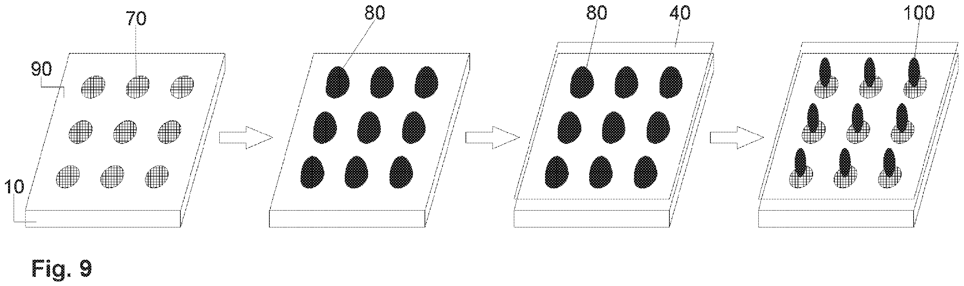

Die Figur 9 zeigt beispielhaft die Herstellung einer Anordnung, bei der die Oberfläche 90 des Trägers 10 zunächst strukturiert, z. B. lokal aufgeraut wird (vgl. erstes Bild von links). Aufgrund dieser Strukturierung wird sich eine strukturierte Materialverteilung, insbesondere Flüssigkeitsverteilung, auf der Trägeroberfläche ergeben. Das zweite Bild von links zeigt Flüssigkeitstropfen 80, die sich auf den aufgerauten Abschnitten 70 des Trägers sammeln.

Das dritte Bild von links zeigt die Flüssigkeitstropfen 80, nachdem diese mit einer zweidimensional vernetzten Schicht 40 abgedeckt worden sind.

Die im dritten Bild gezeigte Anordnung kann nun nachbearbeitet werden, beispielsweise chemisch. Werden die Flüssigkeitstropfen 80 beispielsweise ausgehärtet, so können je nach Flüssigkeitsmenge der eingeschlossenen Flüssigkeitstropfen 80 beispielsweise Nanoteilchen gebildet werden. Solche sind im vierten Bild von links mit dem Bezugszeichen 100 gekennzeichnet.

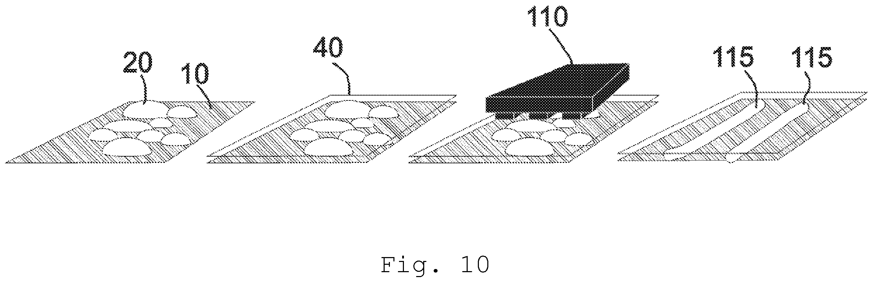

In der Figur 10 ist beispielhaft dargestellt, wie eine vorgegebene oder gewünschte Verteilung des Materials 20 unter der zweidimensional vernetzten Schicht 40 mit Hilfe einer mechanischen Druckeinrichtung, beispielsweise eines Stempels 110, modifiziert werden kann. Es lässt sich erkennen, dass beispielsweise stangenartige Strukturen 115 gestempelt werden können.

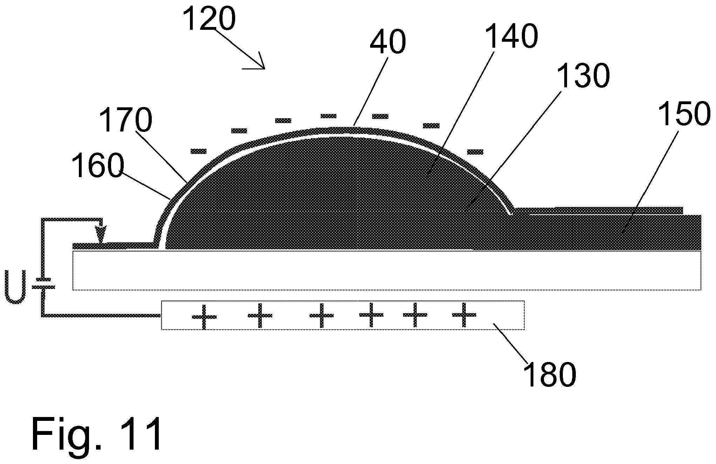

Die Figur 11 zeigt ein Ausführungsbeispiel für eine Anordnung, die eine Fluid-Komponente 120 bildet. Die Fluid-Komponente 120 umfasst einen Aufnahmeabschnitt 130 mit einer Flüssigkeit 140, deren Volumen beispielsweise im Zeptoliterbereich oder im Sub-Zeptoliterbereich liegt. An den Aufnahmeabschnitt 130 schließt sich ein Kanal 150 an, in den die Flüssigkeit 140 eingedrückt wird, wenn der Aufnahmeabschnitt 130 zusammengepresst wird.

In der Figur 11 erkennt man außerdem eine Kondensator- bzw. Elektrodenstruktur 160 mit zumindest zwei Kondensatorflächen 170 und 180, von denen eine durch die zweidimensional vernetzte Schicht 40 gebildet ist. Durch das Anlegen einer elektrischen Spannung U an die Kondensator- bzw. Elektrodenstruktur 160 lassen sich mechanische Druckkräfte erzeugen und die zweidimensional vernetzte Schicht 40 verformen, so dass es zu einer lokalen Druckerhöhung und zu einem Flüssigkeitsstrom in den Kanal 150 kommt. Die Anordnung gemäß der Figur 11 kann somit eine Pumpe oder einen Bestandteil einer Pumpe bilden.

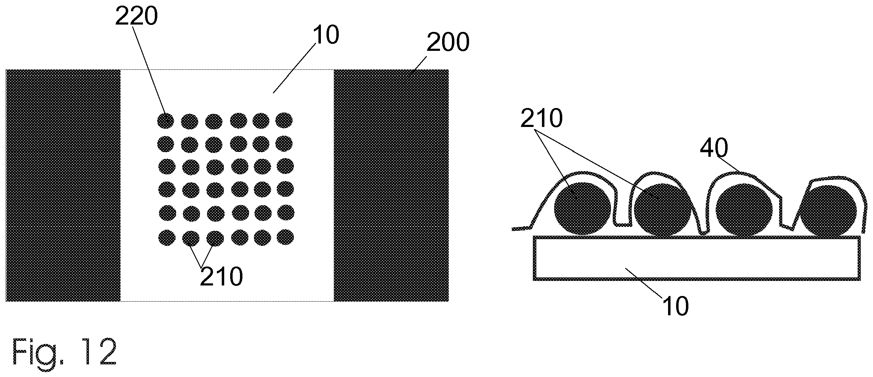

Die Figur 12 zeigt beispielhaft ein Ausführungsbeispiel für eine Anordnung, die eine optische Komponente 200 bildet. Nanoteilchen oder mikrometergroße Teilchen 210 sind mittels einer zweidimensional vernetzten Schicht 40 in einer Matrix angeordnet, so dass sie ein optisches Gitter 220 bilden. Bei den Teilchen 210 handelt es sich vorzugsweise um Teilchen aus einem leitenden, beispielsweise metallischen Material, wie zum Beispiel Gold. Da Graphen für elektromagnetische Wellen, insbesondere Lichtwellen, weitgehend optisch transparent ist, wird die zweidimensional vernetzte Schicht 40 vorzugsweise aus einem solchen oder einem vergleichbaren Material hergestellt.

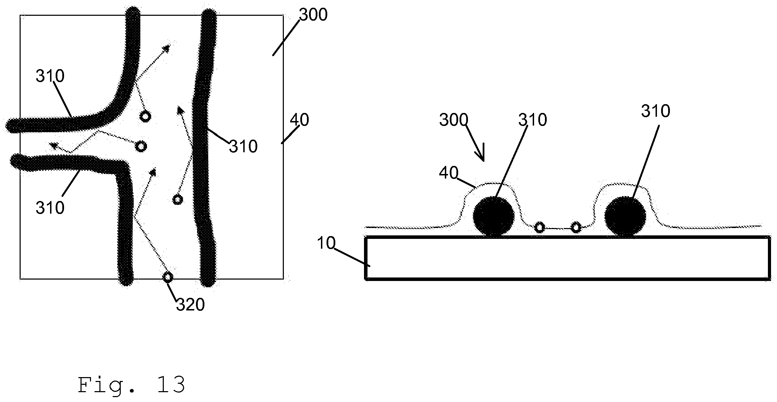

Die Figur 13 zeigt beispielhaft eine Anordnung 300, bei der zwischen dem Träger 10 und der zweidimensional vernetzten Schicht 40 Polymermoleküle 310 in linien- oder stangenartiger Form eingeschlossen sind. Die Polymermoleküle 310 können beispielsweise eine Potentialbarriere für die beweglichen Elektronen 320 in der zweidimensional vernetzten Schicht bilden und damit ein quasi-zweidimensionales Elektronengas einschließen, wie durch Pfeile in der Figur 13 symbolisiert ist.

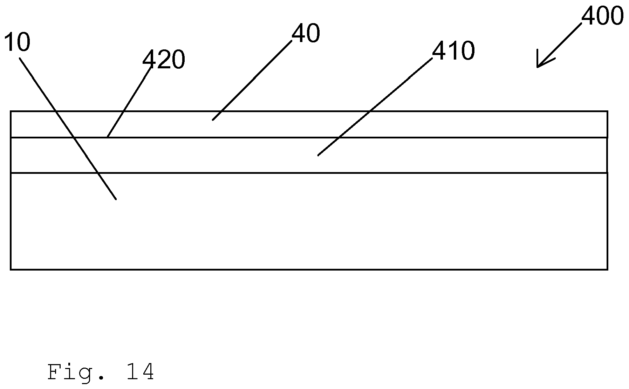

In der Figur 14 ist ein Ausführungsbeispiel für eine Anordnung 400 gezeigt, bei der zwischen dem Träger 10 und der zweidimensional vernetzten Schicht 40 Polymermaterial 410 eingeschlossen ist, um dieses vor äußeren Einflüssen wie Feuchtigkeit oder Wasser zu schützen. Das Polymermaterial 410 bildet vorzugsweise optisch aktives Material einer oder mehrerer nicht weiter dargestellter organischer oder anorganischer Leuchtdioden. Der Träger 10 kann in diesem Falle beispielsweise die elektrischen Anschlüsse sowie weitere Komponenten für die Ansteuerung der organischen oder anorganischen Leuchtdiode(n) tragen. Die Anordnung 400 bildet bevorzugt eine Anzeigeeinrichtung bzw. einen Bildschirm, dessen äußere Oberfläche 420 durch die zweidimensional vernetzte Schicht 40 geschützt wird.

### Bezugszeichen

- 10: Träger
- 20: Material
- 30: Flüssigkeitsmolekül
- 40: zweidimensional vernetzte Schicht
- 50: Moleküleinzelschicht
- 55: Kontur
- 60: Spitze
- 70: aufgerauter Abschnitt
- 80: Flüssigkeitstropfen
- 90: Oberfläche
- 100: Nanoteilchen
- 110: Stempel
- 115: stangenartige Struktur
- 120: Fluidkomponente
- 130: Aufnahmeabschnitt
- 140: Flüssigkeit
- 150: Kanal
- 160: Kondensator- bzw. Elektrodenstruktur
- 170, 180: Kondensatorfläche
- U: elektrische Spannung
- 200: optische Komponente
- 210: Nanoteilchen oder mikrometergroßes Teilchen
- 220: optisches Gitter
- 300: Anordnung
- 310: Polymermolekül
- 320: Elektron
- 400: Anordnung
- 410: Polymermaterial
- 420: äußere Oberfläche

## Patentansprüche

1. Anordnung mit einem Träger (10), einer Schicht und einem zwischen dem Träger und der Schicht eingeschlossenen Material (20),
wobei die Schicht durch eine einzige zweidimensional vernetzte Schicht (40) oder durch mehrere mittelbar oder unmittelbar miteinander verbundene zweidimensional vernetzte Schichten gebildet ist, wobei die zweidimensional vernetzte Schicht bzw. die zweidimensional vernetzten Schichten dünner als 10 Atomlagen sind,
**dadurch gekennzeichnet, dass**
das eingeschlossene Material ausgewählt ist aus der Gruppe biologische Materialien, Flüssigkeiten (30,140), Materialien die eine Flüssigkeit aufweisen, oder Polymere die elektrisch oder optisch aktiv sind.

2. Anordnung nach Anspruch 1,
**dadurch gekennzeichnet, dass**
- die zweidimensional vernetzte Schicht bzw. die zweidimensional vernetzten Schichten für Gase und Flüssigkeiten undurchlässig und atomar glatt sind.

3. Anordnung nach Anspruch 2,
**dadurch gekennzeichnet, dass**
das biologische Material Biomoleküle (z. B. RNA, DNA), Zellen, Viren, Bakterien, Sporen und/oder Prione aufweist.

4. Anordnung nach einem der voranstehenden Ansprüche,
**dadurch gekennzeichnet, dass**
die Oberfläche des Trägers lokal verändert, beispielsweise aufgeraut, strukturiert und/oder funktionalisiert ist.

5. Anordnung nach einem der voranstehenden Ansprüche,
**dadurch gekennzeichnet, dass**
die zweidimensional vernetzte Schicht eine Graphenschicht oder eine graphenartige Schicht ist bzw. die zweidimensional vernetzten Schichten Graphenschichten oder graphenartige Schichten sind.

6. Anordnung nach einem der voranstehenden Ansprüche,
**dadurch gekennzeichnet, dass**
die Oberfläche (90) des Trägers durch eine Silikatschicht gebildet ist.

7. Anordnung nach einem der voranstehenden Ansprüche,
**dadurch gekennzeichnet, dass**
die Anordnung eine Manipulationseinrichtung umfasst, die geeignet ist, auf den Träger (10), die Schicht und/oder das zwischen dem Träger und der Schicht eingeschlossene Material einzuwirken, vorzugsweise mechanisch, elektromagnetisch, thermisch und/oder chemisch.

8. Anordnung nach Anspruch 10,
**dadurch gekennzeichnet, dass**
die Manipulationseinrichtung geeignet ist, voneinander getrennte Materialabschnitte, die zwischen dem Träger und der Schicht eingeschlossen sind, zusammenführen und mit den voneinander getrennten Materialabschnitten einen zusammenhängenden Materialabschnitt zu formen, und/oder geeignet ist, einen zusammenhängenden Materialabschnitt, der zwischen dem Träger und der Schicht eingeschlossen ist, voneinander zu trennen.

9. Anordnung nach einem der voranstehenden Ansprüche,
**dadurch gekennzeichnet, dass**
die Anordnung eine Pumpe oder einen Bestandteil einer Pumpe bildet.

10. Anordnung nach einem der voranstehenden Ansprüche,
**dadurch gekennzeichnet, dass**
die Anordnung eine Kondensatorstruktur (160) mit zwei Kondensatorflächen (170, 180) aufweist, von denen eine durch die zweidimensional vernetzte Schicht oder durch zumindest eine der zweidimensional vernetzten Schichten gebildet ist.

11. Anordnung nach einem der voranstehenden Ansprüche,
**dadurch gekennzeichnet, dass**
das eingeschlossene Material zumindest ein Nanoteilchen (210), zumindest ein mikrometergroßes Teilchen, zumindest ein Einzelmolekül und/oder Polymermaterial aufweist.

12. Verfahren zum Herstellen einer Anordnung, bei dem auf einem Träger eine Schicht, die durch eine einzige zweidimensional vernetzte Schicht (40) oder durch mehrere mittelbar oder unmittelbar miteinander verbundene zweidimensional vernetzte Schichten gebildet ist, aufgebracht wird und zumindest partiell zwischen der Schicht und dem Träger eine Flüssigkeit eingeschlossen wird, wobei die zweidimensional vernetzte Schicht bzw. die zweidimensional vernetzten Schichten dünner als 10 Atomlagen sind.

## Claims

1. Arrangement comprising a support (10), a layer, and a material (20) enclosed between the support and the layer,
the layer being formed by a single two-dimensionally cross-linked layer (40) or by multiple two-dimensionally cross-linked layers directly or indirectly connected to one another, the two-dimensionally cross-linked layer or the two-dimensionally cross-linked layers being thinner than 10 atom layers,
**characterized in that**
the enclosed material is selected from the group consisting of biological materials, liquids (30, 140), materials which comprise a liquid, or polymers which are electrically or optically active.

2. Arrangement according to Claim 1,
**characterized in that**
- the two-dimensionally cross-linked layer or the two-dimensionally cross-linked layers are impermeable for gases and liquids and atomically smooth.

3. Arrangement according to Claim 2,
**characterized in that**
the biological material comprises biomolecules (e.g. RNA, DNA), cells, viruses, bacteria, spores and/or prions.

4. Arrangement according to any of the preceding claims,
**characterized in that**
the surface of the support is modified in a localized manner, for example roughened, structured and/or functionalized.

5. Arrangement according to any of the preceding claims,
**characterized in that**
the two-dimensionally cross-linked layer is a graphene layer or a graphene-like layer or the two-dimensionally cross-linked layers are graphene layers or graphene-like layers.

6. Arrangement according to any of the preceding claims,
**characterized in that**
the surface (90) of the support is formed by a silicate layer.

7. Arrangement according to any of the preceding claims,
**characterized in that**
the arrangement comprises a manipulator suitable for acting on the support (10), the layer and/or the material enclosed between the support and the layer, preferably mechanically, electromagnetically, thermally and/or chemically.

8. Arrangement according to Claim 10,
**characterized in that**
the manipulator is suitable for bringing together separate material segments which are enclosed between the support and the layer and for forming a continuous material segment with the separate material segments and/or is suitable for separating a continuous material segment which is enclosed between the support and the layer.

9. Arrangement according to any of the preceding claims,
**characterized in that**
the arrangement forms a pump or a component of a pump.

10. Arrangement according to any of the preceding claims,
**characterized in that**
the arrangement comprises a capacitor structure (160) having two capacitor surfaces (170, 180), one of which is formed by the two-dimensionally cross-linked layer or by at least one of the two-dimensionally cross-linked layers.

11. Arrangement according to any of the preceding claims,
**characterized in that**
the enclosed material comprises at least one nanoparticle (210), at least one micrometre-sized particle, at least one individual molecule and/or polymer material.

12. Method for producing an arrangement, in which a layer which is formed by a single two-dimensionally cross-linked layer (40) or by multiple two-dimensionally cross-linked layers directly or indirectly connected to one another is applied on a support and a liquid is enclosed at least in part between the layer and the support, the two-dimensionally cross-linked layer or the two-dimensionally cross-linked layers being thinner than 10 atom layers.

## Revendications

1. Agencement comprenant un support (10), une couche et un matériau (20) intercalé entre le support et la couche,
la couche étant formée par une couche réticulée bidimensionnellement unique (40) ou par plusieurs couches réticulées bidimensionnellement reliées directement ou indirectement les unes avec les autres, la couche réticulée bidimensionnellement ou les couches réticulées bidimensionnellement étant d'une épaisseur inférieure à 10 couches atomiques,
**caractérisé en ce que**
le matériau intercalé est choisi dans le groupe constitué par les matériaux biologiques, les liquides (30, 140), les matériaux qui comprennent un liquide ou les polymères qui sont électriquement ou optiquement actifs.

2. Agencement selon la revendication 1, **caractérisé en ce que**
- la couche réticulée bidimensionnellement ou les couches réticulées bidimensionnellement sont imperméables aux gaz et aux liquides et sont atomiquement lisses.

3. Agencement selon la revendication 2, **caractérisé en ce que** le matériau biologique comprend des biomolécules (p. ex. ARN, ADN), des cellules, des virus, des bactéries, des spores et/ou des prions.

4. Agencement selon l'une quelconque des revendications précédentes, **caractérisé en ce que** la surface du support est modifiée localement, par exemple rugosifiée, structurée et/ou fonctionnalisée.

5. Agencement selon l'une quelconque des revendications précédentes, **caractérisé en ce que** la couche réticulée bidimensionnellement est une couche de graphène ou une couche de type graphène ou les couches réticulées bidimensionnellement sont des couches de graphène ou des couches de type graphène.

6. Agencement selon l'une quelconque des revendications précédentes, **caractérisé en ce que** la surface (90) du support est formée par une couche de silicate.

7. Agencement selon l'une quelconque des revendications précédentes, **caractérisé en ce que** l'agencement comprend un dispositif de manipulation, qui est approprié pour agir sur le support (10), la couche et/ou le matériau intercalé entre le support et la couche, de préférence mécaniquement, électromagnétiquement, thermiquement et/ou chimiquement.

8. Agencement selon la revendication 10, **caractérisé en ce que** le dispositif de manipulation est approprié pour assembler des sections de matériau séparées les unes des autres, qui sont intercalées entre le support et la couche, et former une section de matériau cohérente avec les sections de matériau séparées les unes des autres, et/ou est approprié pour séparer une section de matériau cohérente, qui est intercalée entre le support et la couche.

9. Agencement selon l'une quelconque des revendications précédentes, **caractérisé en ce que** l'agencement forme une pompe ou un constituant d'une pompe.

10. Agencement selon l'une quelconque des revendications précédentes, **caractérisé en ce que** l'agencement comprend une structure de condensateur (160) comprenant deux surfaces de condensateur (170, 180), parmi lesquelles une est formée par la couche réticulée bidimensionnellement ou par au moins une des couches réticulées bidimensionnellement.

11. Agencement selon l'une quelconque des revendications précédentes, **caractérisé en ce que** le matériau intercalé comprend au moins une nanoparticule (210), au moins une particule de taille micrométrique, au moins une molécule individuelle et/ou un matériau polymère.

12. Procédé de fabrication d'un agencement, selon lequel une couche qui est formée par une couche réticulée bidimensionnellement unique (40) ou par plusieurs couches réticulées bidimensionnellement reliées directement ou indirectement les unes avec les autres est appliquée sur un support, et un liquide est au moins partiellement intercalé entre la couche et le support, la couche réticulée bidimensionnellement ou les couches réticulées bidimensionnellement étant d'une épaisseur inférieure à 10 couches atomiques.
